# EUROPEAN PATENT APPLICATION

(11) **EP 4 596 855 A1**
(43) Date of publication of application: **06.08.2025**
(21) Application number: 23888340.9
(22) Date of filing: 14.09.2023
(51) Int. Cl.: F02C 6/00, B01D 53/62, C01B 32/50, F02C 3/22, F02C 6/18, F02C 7/22, F23R 3/28

(54) **CARBON DIOXIDE RECOVERY SYSTEM**

(30) Priority: 11.11.2022 JP 2022181258
(71) Applicant: Mitsubishi Heavy Industries, Ltd., Tokyo 100-8332 (JP)
(72) Inventor: TSUJIUCHI, Tatsuya, Tokyo 100-8332 (JP); HIRATA, Takuya, Tokyo 100-8332 (JP); YOSHIKAWA, Masashi, Tokyo 100-8332 (JP); UECHI, Hideyuki, Tokyo 100-8332 (JP); PHAM, Khanhson, Tokyo 100-8332 (JP); KIMURA, Shintaro, Tokyo 100-8332 (JP)
(74) Representative: Studio Torta S.p.A.
(86) International application number: PCT/JP2023/033523
(87) International publication number: WO 2024/100986

(57) **Abstract**

This carbon dioxide recovery system comprises: an iron-making facility; a gas turbine which drives a turbine by means of a combustion gas generated by burning a first gas discharged from the iron-making facility; a heat exchanger for exchanging heat between a second gas discharged from the turbine of a gas turbine and a heat medium; and a carbon dioxide recovery device for recovering carbon dioxide from the second gas which has been heat-exchanged with the heat medium in the heat exchanger. The carbon dioxide recovery device comprises: an absorption tower that causes the carbon dioxide to be absorbed in an absorbent by bringing the second gas into contact with the absorbent; a regeneration tower that heats the absorbent that has absorbed the carbon dioxide in the absorption tower and causes the carbon dioxide to be released from the absorbent; and a reboiler which heats the absorbent by means of heat exchange between the absorbent inside the regeneration tower and the heat medium which has been heat-exchanged with the second gas in the heat exchanger.

## Description

### Technical Field

The present disclosure relates to a carbon dioxide recovery system.

The present application claims priority based on Japanese Patent Application No. 2022-181258 filed in Japan on November 11, 2022, the contents of which are incorporated herein by reference.

### Background Art

In an iron-making plant, iron ore is reduced using fossil fuel to obtain iron, and thus carbon dioxide is discharged. For example, in PTL 1, the blast furnace gas is supplied to a gas turbine as fuel after the carbon dioxide is separated and removed from the blast furnace gas. In PTL 2, after the separation and recovery of the carbon dioxide (PSA method) in a circulation gas of the iron-making plant, the circulation gas is supplied to the gas turbine as fuel.

### Citation List

### Patent Literature

[PTL 1] Japanese Unexamined Patent Application Publication No. 2010-229919
[PTL 2] U.S. Patent No. 9222042

### Summary of Invention

### Technical Problem

As in PTLs 1 and 2, even when carbon dioxide is separated and removed from an exhaust gas of an iron-making plant, there is a problem in that carbon dioxide is generated again when the carbon dioxide is combusted in a gas turbine as fuel. In addition, when a gas from which the carbon dioxide is separated and removed is combusted as the fuel for the gas turbine, a calorie of the fuel increases. Therefore, in PTL 2, a nitrogen gas, which is an inert component, is supplied to a circulation gas as the fuel for calorific adjustment. However, there is also a problem in that an amount of nitrogen supplied to the fuel increases as a concentration of the carbon dioxide in the fuel decreases.

In view of the above circumstances, an object of at least one embodiment of the present disclosure is to provide a carbon dioxide recovery system capable of recovering carbon dioxide generated in an iron-making facility and a gas turbine even when a gas discharged from the iron-making facility is used as fuel for the gas turbine, and capable of suppressing an increase in a supply amount of nitrogen used for calorific adjustment of the fuel for the gas turbine.

### Solution to Problem

In order to achieve the above object, a carbon dioxide recovery system according to the present disclosure includes an iron-making facility; a gas turbine that drives a turbine with a combustion gas generated by combusting a first gas discharged from the iron-making facility; a heat exchanger that exchanges heat between a second gas discharged from the turbine of the gas turbine and a heat medium; and a carbon dioxide recovery device that recovers carbon dioxide from the second gas that has exchanged heat with the heat medium in the heat exchanger, in which the carbon dioxide recovery device includes an absorption tower that causes carbon dioxide to be absorbed in an absorption liquid by bringing the second gas and the absorption liquid into contact with each other, a regeneration tower that heats the absorption liquid, which has absorbed the carbon dioxide in the absorption tower, to release the carbon dioxide from the absorption liquid, and a reboiler that heats the absorption liquid by exchanging heat between the absorption liquid in the regeneration tower and the heat medium that has exchanged heat with the second gas in the heat exchanger.

### Advantageous Effects of Invention

According to a carbon dioxide recovery system of the present disclosure, a carbon dioxide recovery device recovers carbon dioxide from a gas discharged from a gas turbine. Therefore, even when a gas discharged from the iron-making facility is used as fuel for the gas turbine, the carbon dioxide generated in the iron-making facility and the gas turbine can be recovered, and a concentration of the carbon dioxide, which is an inert component contained in the gas discharged from the iron-making facility, is not reduced. Therefore, it is possible to suppress an increase in a supply amount of nitrogen, which is an inert component used for calorific adjustment of the fuel for the gas turbine.

### Brief Description of Drawings

Fig. 1 is a configuration diagram of a carbon dioxide recovery system according to Embodiment 1 of the present disclosure.
Fig. 2 is a configuration diagram of a modification example of the carbon dioxide recovery system according to Embodiment 1 of the present disclosure.
Fig. 3 is a configuration diagram of another modification example of the carbon dioxide recovery system according to Embodiment 1 of the present disclosure.
Fig. 4 is a configuration diagram of still another modification example of the carbon dioxide recovery system according to Embodiment 1 of the present disclosure.
Fig. 5 is a configuration diagram of a carbon dioxide recovery system according to Embodiment 2 of the present disclosure.
Fig. 6 is a configuration diagram of a modification example of the carbon dioxide recovery system according to Embodiment 2 of the present disclosure.
Fig. 7 is a configuration diagram of a carbon dioxide recovery system according to Embodiment 3 of the present disclosure.
Fig. 8 is a configuration diagram of a portion of a carbon dioxide recovery system according to each of Embodiments 1 to 3 of the present disclosure.

### Description of Embodiments

Hereinafter, a carbon dioxide recovery system according to embodiments of the present disclosure will be described with reference to the drawings. The embodiments which will be described below show aspects of the present disclosure and do not limit the disclosure, and any change can be made within the scope of the technical idea of the present disclosure.

### (Embodiment 1)

### <Configuration of Carbon Dioxide Recovery System According to Embodiment 1 of Present Disclosure>

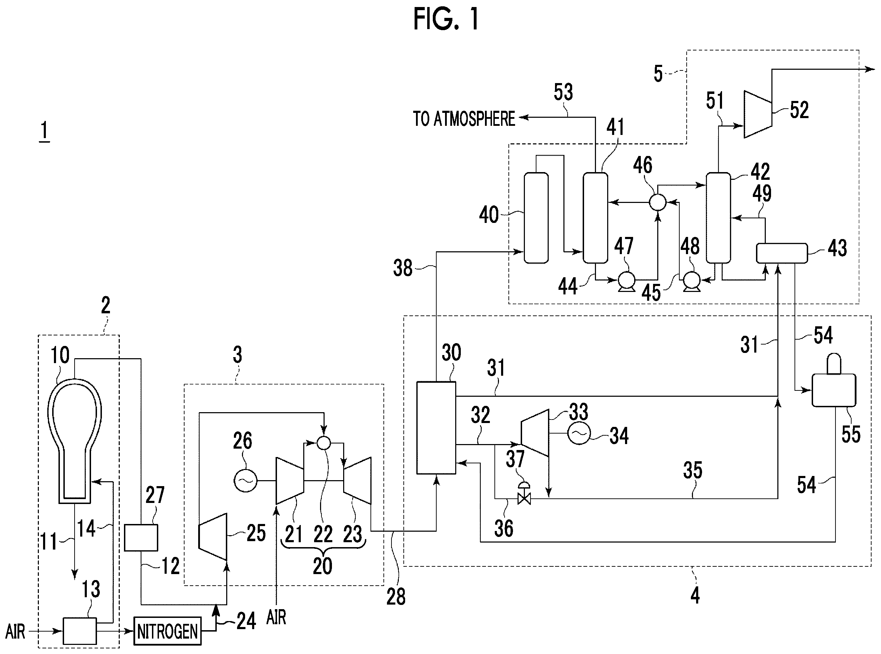

As shown in Fig. 1, a carbon dioxide recovery system 1 according to Embodiment 1 of the present disclosure includes an iron-making facility 2, a gas turbine facility 3, a steam generation facility 4, and a carbon dioxide recovery device 5.

The iron-making facility 2 includes a melter-gasifier 10 for performing iron-making using coal and iron ore as raw materials. The melter-gasifier 10 is connected to a discharge line 11 through which molten iron, slag, or the like is discharged, and an exhaust line 12 through which a first gas that is an exhaust gas containing a combustible component (for example, carbon monoxide) and carbon dioxide is exhausted.

The gas turbine facility 3 includes a gas turbine 20 and a first power generation device 26 driven by the gas turbine 20. The gas turbine 20 includes a compressor 21 that compresses air, a combustor 22 that combusts a first gas using the compressed air compressed by the compressor 21, and a turbine 23 that is driven by a combustion gas generated by combusting the first gas in the combustor 22. The other end of the exhaust line 12, one end of which is connected to the melter-gasifier 10, is connected to the combustor 22. A nitrogen supply line 24 for supplying nitrogen, which is an inert component, to the first gas is provided in the exhaust line 12. A nitrogen supply source is not particularly limited. For example, in a case where the iron-making facility 2 has an oxygen-blown melter-gasifier 10, an air separator 13 may be provided in the iron-making facility 2, an air may be separated into nitrogen and oxygen by the air separator 13, the oxygen may be supplied to the melter-gasifier 10 via an oxygen line 14, and the nitrogen may be supplied to the first gas via the nitrogen supply line 24. The configuration of the air separator 13 is not particularly limited, and an oxygen separation device having any configuration such as a pressure swing adsorption (PSA) device, a temperature swing adsorption (TSA) device, or a membrane separation device can be used.

In a case where the differential pressure between the iron-making facility 2 and the gas turbine 20 is small, a compressor 25 for pressurizing the first gas to which nitrogen is supplied may be provided in the exhaust line 12. In addition, a dust collection device 27 (for example, an electric dust collector, a bag filter, or the like) for removing solid components from the first gas may be provided on the exhaust line 12 on an upstream side of the compressor 25.

The steam generation facility 4 includes a heat exchanger 30 that exchanges heat between a second gas discharged from the turbine 23 of the gas turbine 20 and a heat medium (for example, water). The turbine 23 and the heat exchanger 30 communicate with each other via a second gas line 28. In the heat exchanger 30 of Embodiment 1, a first line 31 for extracting steam (for example, steam) of a heat medium, that is, low-pressure steam, from a position in the middle of a flow path (not shown) through which the heat medium exchanging heat with the second gas flows, and a high-pressure steam line 32 for allowing high-pressure steam, which is steam having a higher temperature and a higher pressure than the low-pressure steam, to flow out from a downstream end of the flow path through which the heat medium flows are connected.

The steam generation facility 4 may include a steam turbine 33 that is driven by high-pressure steam and a second power generation device 34 that is driven by the steam turbine 33. In addition, the steam generation facility 4 may include a second line 35 for supplying the high-pressure steam (the pressure is reduced because the steam turbine 33 is driven, and hereinafter, simply referred to as steam) used for driving the steam turbine 33 to the first line 31. Further, the steam generation facility 4 may include a bypass line 36 for supplying the high-pressure steam to the second line 35 by bypassing the steam turbine 33, and a flow rate regulation valve 37 that is a bypass flow rate regulating device for regulating a flow rate of the high-pressure steam flowing through the bypass line 36.

The carbon dioxide recovery device 5 includes a cooling tower 40 that cools the second gas flowing out from the heat exchanger 30, an absorption tower 41 that causes carbon dioxide contained in the second gas cooled in the cooling tower 40 to be absorbed in an absorption liquid, a regeneration tower 42 that releases the carbon dioxide by heating the absorption liquid that has absorbed the carbon dioxide in the absorption tower 41, and a reboiler 43 for heating the absorption liquid in the regeneration tower 42. The heat exchanger 30 and the cooling tower 40 communicate with each other via the second gas line 38. In the carbon dioxide recovery device 5, the cooling tower 40 is not an essential configuration, and in a case where the temperature of the second gas flowing out from the heat exchanger 30 is sufficiently low and the concentration of solid components such as sulfur oxides or dust contained in the second gas is sufficiently low, the cooling tower 40 may not be provided. In a case where the carbon dioxide recovery device 5 does not include the cooling tower 40, the heat exchanger 30 and the absorption tower 41 communicate with each other via the second gas line 38.

The absorption tower 41 and the regeneration tower 42 are communicated with each other by a rich absorption liquid line 44 connected to a bottom of the absorption tower 41 and a position located higher than a bottom of the regeneration tower 42 and a lean absorption liquid line 45 connected to the bottom of the regeneration tower 42 and a position located higher than the bottom of the absorption tower 41. As will be described later, a rich absorption liquid, which is an absorption liquid containing a large amount of carbon dioxide, flows through the rich absorption liquid line 44, and a lean absorption liquid, which is an absorption liquid in which carbon dioxide is released from the rich absorption liquid and the carbon dioxide content is relatively lower than that of the rich absorption liquid, flows through the lean absorption liquid line 45. A heat exchanger 46 that exchanges heat between the rich absorption liquid flowing through the rich absorption liquid line 44 and the lean absorption liquid flowing through the lean absorption liquid line 45 is provided. In the rich absorption liquid line 44, a rich absorption liquid pump 47 is provided between the absorption tower 41 and the heat exchanger 46. In the lean absorption liquid line 45, a lean absorption liquid pump 48 is provided between the regeneration tower 42 and the heat exchanger 46.

An exhaust line 53 for releasing the gas in the absorption tower 41 to the atmosphere is connected to a top of the absorption tower 41. The regeneration tower 42 is provided with a circulation line 49 in which the absorption liquid circulates so as to extract the absorption liquid in the regeneration tower 42 from the bottom and return the absorption liquid to the regeneration tower 42 again. The circulation line 49 is provided to pass through the reboiler 43. Although details will be described in the description of the operation of the carbon dioxide recovery system 1 to be described later, the absorption liquid is allowed to flow in the carbon dioxide recovery device 5 by the rich absorption liquid pump 47 and the lean absorption liquid pump 48. An outflow line 51 for flowing out the gas in the regeneration tower 42, that is, the gas containing the carbon dioxide released from the absorption liquid, from the regeneration tower 42 is connected to a top of the regeneration tower 42. A booster 52 for pressurizing the gas may be provided in the outflow line 51.

The other end of the first line 31, one end of which is connected to a flow path (not shown) through which the heat medium flows in the heat exchanger 30, is connected to a flow path (not shown) of the reboiler 43. The low-pressure steam of the heat medium flowing through the flow path of the reboiler 43 via the first line 31 exchanges heat with the absorption liquid circulating through the circulation line 49, which will be described in detail later. In addition, the reboiler 43 may be provided with a heat medium return line 54 for returning the heat medium that has exchanged heat with the absorption liquid to the heat exchanger 30 again. A tank 55 for storing a portion of the condensed heat medium may be provided in the heat medium return line 54.

### <Operation of Carbon Dioxide Recovery System According to Embodiment 1 of Present Disclosure>

Next, the operation of the carbon dioxide recovery system according to Embodiment 1 of the present disclosure will be described with reference to Fig. 1. The operation will be described on the assumption that the heat medium is water. The first gas is exhausted from the melter-gasifier 10 by an iron-making operation in the iron-making facility 2. The first gas exhausted from the melter-gasifier 10 is supplied to the combustor 22 of the gas turbine 20 as fuel via the exhaust line 12. When the first gas flows through the exhaust line 12, nitrogen is supplied to the first gas via the nitrogen supply line 24 for calorific adjustment when the first gas is combusted. In a case where the compressor 25 is provided in the exhaust line 12, the first gas is supplied to the combustor 22 by being pressurized by the compressor 25. In addition, in a case where the dust collection device 27 is provided in the exhaust line 12, the solid components are removed from the first gas in the dust collection device 27. Therefore, the first gas having a reduced solid component content is supplied to the combustor 22 (and the compressor 25). In this manner, the risk of failure of the gas turbine 20 (and the compressor 25) can be reduced.

The combustor 22 is supplied with the first gas as fuel and the compressed air compressed by the compressor 21, and the first gas is combusted using the compressed air. The combustion gas generated by the combustion of the first gas in the combustor 22 drives the turbine 23. The first power generation device 26 is driven by the rotation of the compressor 21 and the turbine 23, and power generation is performed. The power generated by the first power generation device 26 may be used to drive at least one of the rich absorption liquid pump 47, the lean absorption liquid pump 48, or the booster 52. According to such a configuration, by using the power, which is generated by the carbon dioxide recovery system 1, inside the carbon dioxide recovery system 1, it is possible to reduce the power that needs to be supplied from an outside of the carbon dioxide recovery system 1 or to make it unnecessary to supply the power from the outside of the carbon dioxide recovery system 1.

The second gas discharged from the turbine 23 flows into the heat exchanger 30 via the second gas line 28. In the heat exchanger 30, the second gas is cooled by exchanging heat with water, which is a heat medium. On the other hand, the water heated by exchanging heat with the second gas in the heat exchanger 30 is partially extracted as low-pressure steam from a flow path in the heat exchanger 30 via the first line 31, and the remainder flows out from the heat exchanger 30 as high-pressure steam via the high-pressure steam line 32. The low-pressure steam flowing through the first line 31 is supplied to the reboiler 43 of the carbon dioxide recovery device 5.

The high-pressure steam flowing through the high-pressure steam line 32 is supplied to the steam turbine 33 to drive the steam turbine 33. The steam turbine 33 drives the second power generation device 34 to generate power. The power generated by the second power generation device 34 may be used to drive at least one of the rich absorption liquid pump 47, the lean absorption liquid pump 48, or the booster 52. According to such a configuration, by using the power, which is generated by the carbon dioxide recovery system 1, inside the carbon dioxide recovery system 1, it is possible to reduce the power that needs to be supplied from an outside of the carbon dioxide recovery system 1 or to make it unnecessary to supply the power from the outside of the carbon dioxide recovery system 1. The steam used to drive the steam turbine 33 flows out from the steam turbine 33 and flows through the second line 35. The steam flowing out from the steam turbine 33 has a pressure equal to or higher than the pressure of the low-pressure steam, and thus flows through the second line 35 even without a pressurizing device. The steam flowing through the second line 35 flows into the first line 31, is mixed with the low-pressure steam, and is supplied to the reboiler 43.

The second gas that has exchanged heat with the water in the heat exchanger 30 flows out from the heat exchanger 30, and then flows through the second gas line 38 to flow into the cooling tower 40 of the carbon dioxide recovery device 5. In the cooling tower 40, the second gas rises and cooling water falls, so that the second gas and the cooling water are in gas-liquid contact with each other, and the second gas is cooled. In a case where the second gas contains sulfur oxide, solid components, or the like, the sulfur oxide, the solid components, or the like are captured by the cooling water due to the gas-liquid contact between the second gas and the cooling water, and the sulfur oxide, the solid components, or the like are removed from the second gas. In a case where the cooling tower 40 is not provided in the carbon dioxide recovery device 5, the second gas flows into the absorption tower 41.

The second gas flowing out from the cooling tower 40 flows into the absorption tower 41. In the absorption tower 41, the second gas rises and the lean absorption liquid falls, so that the second gas and the lean absorption liquid are in gas-liquid contact with each other, and the carbon dioxide contained in the second gas is absorbed by the lean absorption liquid. The lean absorption liquid becomes a rich absorption liquid by absorbing carbon dioxide, and stays at the bottom portion of the absorption tower 41. Due to such an operation, at least a part of the carbon dioxide is removed from the second gas, and the second gas in which the concentration of the carbon dioxide is lowered flows out from the top of the absorption tower 41 and is released into the atmosphere via the exhaust line 53. The exhaust line 53 may be connected to another facility, for example, a chimney, and the second gas having a reduced carbon dioxide concentration may be released via the chimney.

The rich absorption liquid in the absorption tower 41 is extracted from the bottom of the absorption tower 41 by the rich absorption liquid pump 47 and flows through the rich absorption liquid line 44. The rich absorption liquid flowing through the rich absorption liquid line 44 is heated by exchanging heat with the lean absorption liquid flowing through the lean absorption liquid line 45, which will be described later, in the heat exchanger 46, and then flows into the regeneration tower 42. The rich absorption liquid that has flowed into the regeneration tower 42 falls inside the regeneration tower 42. The rich absorption liquid is heated by coming into contact with saturated steam generated by an operation to be described later and rising inside the regeneration tower 42 when falling inside the regeneration tower 42. In this manner, at least a part of the carbon dioxide is released from the rich absorption liquid, and the rich absorption liquid becomes the lean absorption liquid and stays at the bottom of the regeneration tower 42. The lean absorption liquid in the regeneration tower 42 is extracted from the bottom of the regeneration tower 42, flows through the circulation line 49, and is returned to the regeneration tower 42 again. When the lean absorption liquid flows through the circulation line 49, the lean absorption liquid is heated by heat exchange between the lean absorption liquid and the steam in the reboiler 43. Accordingly, a temperature of the lean absorption liquid in the regeneration tower 42 rises, so that the carbon dioxide is released from the lean absorption liquid, the water evaporates, and the saturated steam containing mainly the carbon dioxide and the steam rises in the regeneration tower 42. The circulation of the lean absorption liquid via the circulation line 49 may be performed using a pump (not shown) provided in the circulation line 49, or may be performed by a difference in density of the absorption liquid without providing a pump.

The lean absorption liquid in the regeneration tower 42 is also extracted from the bottom of the regeneration tower 42 by the lean absorption liquid pump 48 and flows through the lean absorption liquid line 45. The lean absorption liquid flowing through the lean absorption liquid line 45 is cooled by exchanging heat with the rich absorption liquid flowing through the rich absorption liquid line 44 in the heat exchanger 46. The lean absorption liquid cooled in the heat exchanger 46, as described above, flows into the absorption tower 41 and falls inside the absorption tower 41.

The gas containing the carbon dioxide that is released from the rich absorption liquid and the lean absorption liquid in the regeneration tower 42 flows out from the top of the regeneration tower 42 and flows through the outflow line 51. The gas flowing through the outflow line 51 is supplied to a facility that consumes carbon dioxide or a facility that stores carbon dioxide (neither of which is shown) by being pressurized by the booster 52.

In the carbon dioxide recovery device 5, the amount of heat required in the reboiler 43 changes according to a recovery amount of the carbon dioxide. In contrast, in Embodiment 1, the flow rate of the high-pressure steam bypassing the steam turbine 33 can be regulated by regulating an opening degree of the flow rate regulation valve 37. For example, when the flow rate of the high-pressure steam bypassing the steam turbine 33 is increased (the opening degree of the flow rate regulation valve 37 is increased), the amount of low-pressure steam supplied to the reboiler 43 decreases, while the amount of high-pressure steam having a higher temperature and a higher pressure than the low-pressure steam supplied to the reboiler 43 increases. Therefore, the amount of heat to be applied to the reboiler 43 increases. On the contrary, when the flow rate of the high-pressure steam bypassing the steam turbine 33 is reduced (the opening degree of the flow rate regulation valve 37 is reduced), the amount of heat to be applied to the reboiler 43 is reduced. In this way, by regulating the opening degree of the flow rate regulation valve 37, the supply amount of the low-pressure steam to the reboiler 43 and the supply amount of the high-pressure steam that bypasses the steam turbine 33 and is supplied to the reboiler 43 can be regulated. Therefore, the heat amount corresponding to the recovery amount of the carbon dioxide can be applied to the reboiler 43.

The steam that has exchanged heat with the lean absorption liquid in the reboiler 43 flows into the heat exchanger 30 again via the heat medium return line 54 and exchanges heat with the second gas. Although the steam that has exchanged heat with the lean absorption liquid can be discarded in the reboiler 43 without providing the heat medium return line 54, and new water can be constantly supplied to the heat exchanger 30, when the configuration is adopted in which the heat medium return line 54 is provided, a certain amount of water circulates between the heat exchanger 30 and the reboiler 43, and thus the consumption of water can be suppressed. When water is supplied to the heat exchanger 30, a portion of the condensed water may be stored in the tank 55.

In this way, since the carbon dioxide recovery device 5 recovers the carbon dioxide from the gas discharged from the gas turbine 20, even when the first gas discharged from the iron-making facility 2 is used as the fuel for the gas turbine 20, the carbon dioxide generated in the iron-making facility 2 and the gas turbine 20 can be recovered, and the concentration of the carbon dioxide, which is an inert component contained in the first gas discharged from the iron-making facility 2, is not reduced. Therefore, it is possible to suppress an increase in the supply amount of nitrogen, which is an inert component used for calorific adjustment of the fuel for the gas turbine 20.

Unlike Embodiment 1 described above, when the carbon dioxide is recovered from the first gas in the iron-making facility 2, the supply amount of the nitrogen supplied for calorific adjustment increases in the first gas before flowing into the combustor 22. In this case, it is necessary to use a large device as the air separator 13 provided in the iron-making facility 2 or to further add another air separator. However, in Embodiment 1, by recovering the carbon dioxide from the gas discharged from the gas turbine 20, an increase in the supply amount of nitrogen due to the recovery of the carbon dioxide from the first gas does not occur, and as a result, an increase in the amount of nitrogen used for calorific adjustment can be suppressed. Therefore, the nitrogen separated by the air separator 13 for generating the oxygen supplied to the melter-gasifier 10 can be used.

### <Modification Example of Carbon Dioxide Recovery System According to Embodiment 1 of Present Disclosure>

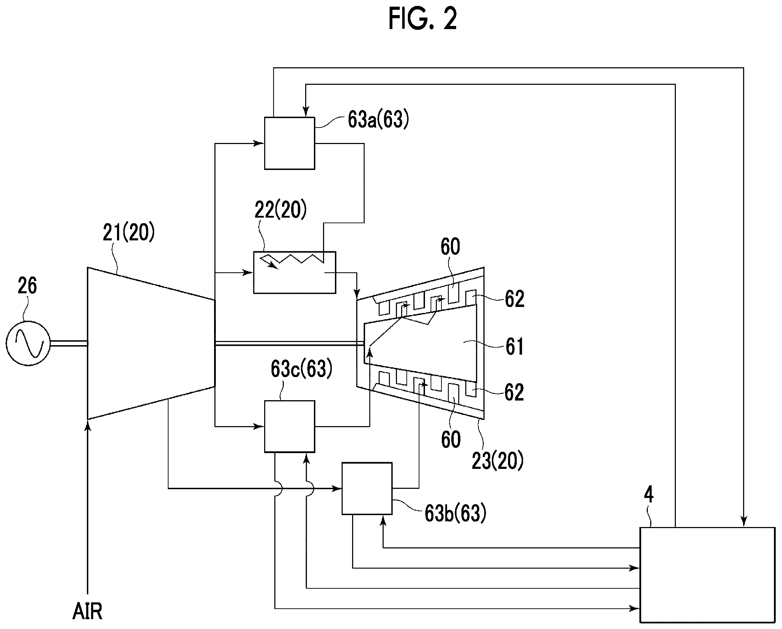

In Embodiment 1, the heat for heating the lean absorption liquid in the reboiler 43 is the heat recovered from the second gas in the heat exchanger 30. However, the heat is not limited thereto. As shown in Fig. 2, in the gas turbine 20, normally, cooling air obtained by cooling a portion of the compressed air is used to cool the inside of the combustor 22, the stator blades 60 of the turbine 23, the turbine rotor 61, the rotor blades 62 of the turbine rotor 61, and the like. For this reason, the gas turbine 20 includes an air cooler 63 for cooling the compressed air. The air cooler 63 is a heat exchanger that exchanges heat between the compressed air and the water supplied from the steam generation facility 4, and the compressed air is cooled and the water is heated by the heat exchange. The air cooler 63 may have a configuration including, for example, a cooler 63a for preparing cooling air for cooling the inside of the combustor 22, a cooler 63b for preparing cooling air for cooling the stator blades 60 of the turbine 23, and a cooler 63c for preparing cooling air for cooling the turbine rotor 61 and the rotor blades 62 of the turbine rotor 61. The water (or steam) heated in the air cooler 63 may return to the steam generation facility 4 and may be directly supplied to the reboiler 43 (refer to Fig. 1) or may be mixed with the water that has been exchanged heat with the second gas in the heat exchanger 30 (refer to Fig. 1), may be heated, and then supplied to the reboiler 43.

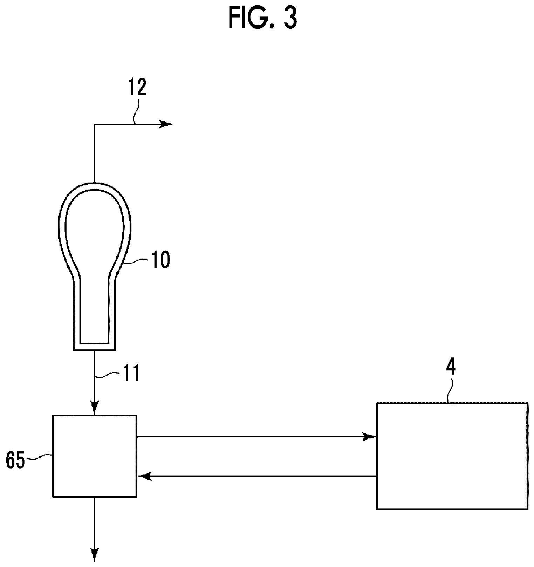

As shown in Fig. 3, a heat generating body cooler 65 that is a heat exchanger that exchanges heat between a heat generating body such as molten iron or slag and the water supplied from the steam generation facility 4 may be provided in the discharge line 11. The water (or steam) heated by exchanging heat with the heat generating body in the heat generating body cooler 65 may be returned to the steam generation facility 4 and may be directly supplied to the reboiler 43 (refer to Fig. 1) or may be mixed with the water that has exchanged heat with the second gas in the heat exchanger 30 (refer to Fig. 1), may be heated and then supplied to the reboiler 43.

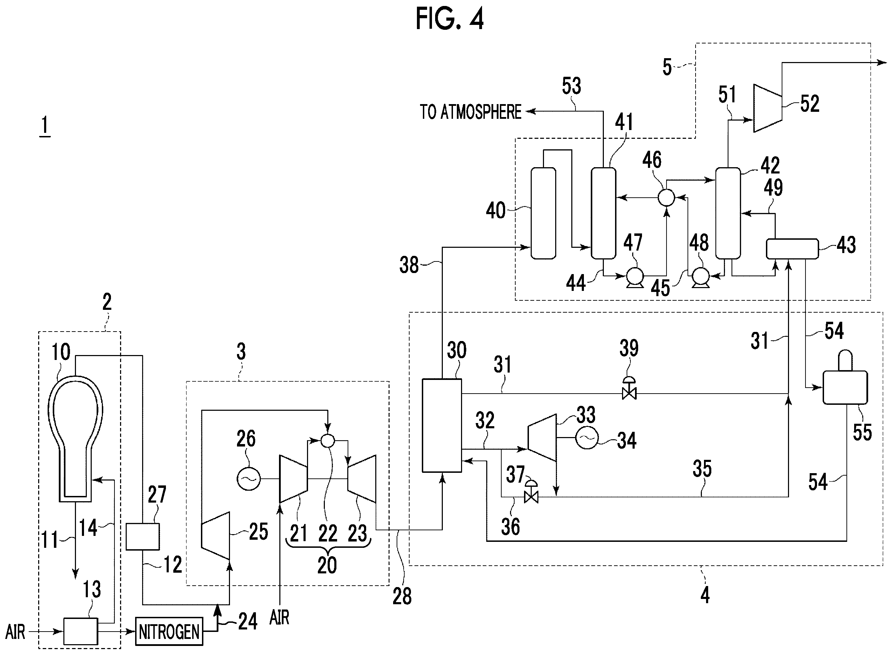

In Embodiment 1, the amount of heat to be applied to the reboiler 43 is regulated only by regulating the opening degree of the flow rate regulation valve 37. However, the present disclosure is not limited to this embodiment. As shown in Fig. 4, a first supply amount regulation valve 39, which is the first supply amount regulating device, may be provided in the first line 31, and the amount of heat to be applied to the reboiler 43 may be regulated by regulating the opening degrees of both the first supply amount regulation valve 39 and the flow rate regulation valve 37. For example, in order to increase the amount of heat to be applied to the reboiler 43, the opening degree of the first supply amount regulation valve 39 is reduced to reduce the amount of low-pressure steam supplied to the reboiler 43 and to increase the amounts of steam that has driven the steam turbine 33 and high-pressure steam that has bypassed the steam turbine 33 and that is supplied to the reboiler 43. In order to increase the amount of heat to be applied to the reboiler 43, the opening degree of the flow rate regulation valve 37 is increased, and the amount of high-pressure steam that has bypassed the steam turbine 33 and that is supplied to the reboiler 43 is increased. On the contrary, in order to reduce the amount of heat to be applied to the reboiler 43, the opening degree of the first supply amount regulation valve 39 is increased. In order to further reduce the amount of heat to be applied to the reboiler 43, the opening degree of the flow rate regulation valve 37 is reduced, and the amount of the steam that has driven the steam turbine 33 and that is supplied to the reboiler 43 is increased.

### (Embodiment 2)

Next, a carbon dioxide recovery system according to Embodiment 2 will be described. The carbon dioxide recovery system according to Embodiment 2 is obtained by changing the configuration of the steam generation facility 4 with respect to Embodiment 1. Further, in Embodiment 2, the same components as those in Embodiment 1 are designated by the same reference signs, and the detailed descriptions thereof will not be repeated.

### <Configuration of Carbon Dioxide Recovery System According to Embodiment 2 of Present Disclosure>

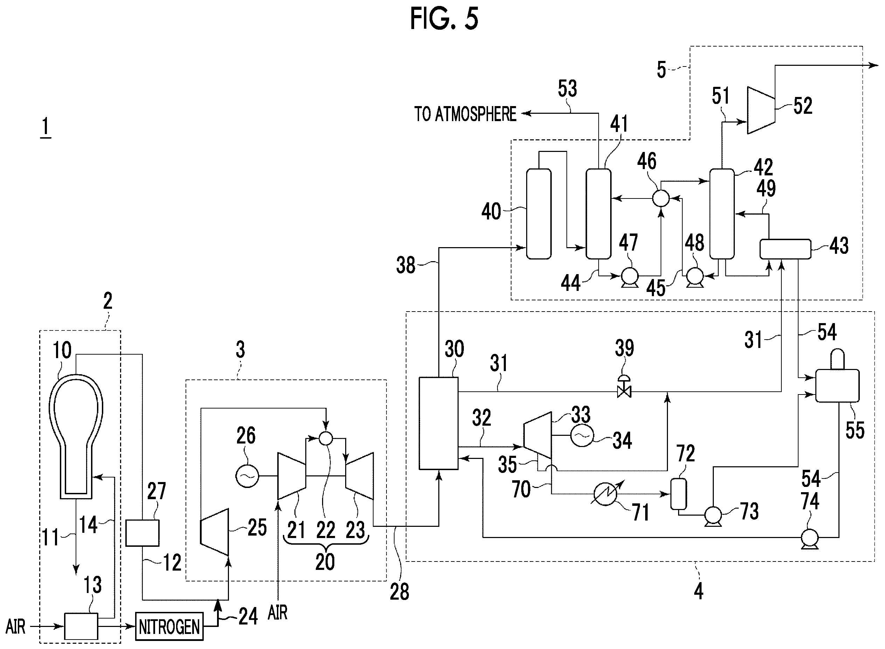

As shown in Fig. 5, in the carbon dioxide recovery system 1 according to Embodiment 2 of the present disclosure, the first line 31 of the steam generation facility 4 is provided with a first supply amount regulation valve 39, which is a first supply amount regulating device. One end of the second line 35 is connected to the steam turbine 33 so as to extract the steam from the steam turbine 33, and the other end of the second line 35 is connected to the first line 31 on a downstream side of the first supply amount regulation valve 39. One end of a discharge line 70 for discharging the steam that has driven the steam turbine 33 is connected to the steam turbine 33. The other end of the discharge line 70 is connected to the tank 55. The discharge line 70 is provided with a cooler 71 that cools the steam flowing through the discharge line 70, a condenser 72, and a pump 73. A pump 74 is provided between the tank 55 and the heat exchanger 30 in the heat medium return line 54. The other configurations are the same as those in Embodiment 1.

### <Operation of Carbon Dioxide Recovery System According to Embodiment 2 of Present Disclosure>

Next, the operation of the carbon dioxide recovery system according to Embodiment 2 of the present disclosure will be described with reference to Fig. 5. However, the operation of Embodiment 2 is different from the operation of Embodiment 1 only in the operation of the steam generation facility 4, and the operation of other configurations is the same. Therefore, only the operation of the steam generation facility 4 will be described below.

In Embodiment 1, the low-pressure steam and the steam that has driven the steam turbine 33 are supplied to the reboiler 43. However, in Embodiment 2, the low-pressure steam and the steam extracted from the steam turbine 33 are supplied to the reboiler 43. In Embodiment 2, the steam that has driven the steam turbine 33 is cooled in the cooler 71 while flowing through the discharge line 70, is condensed in the condenser 72, and is supplied to the tank 55 by the pump 73. The tank 55 is also supplied with the steam (or water) that has exchanged heat with the absorption liquid in the reboiler 43, and the mixed water thereof is supplied again to the heat exchanger 30 by the pump 74.

In Embodiment 2, it is also possible to regulate the amount of heat to be applied to the reboiler 43. For example, in a case where the amount of heat to be applied to the reboiler 43 is increased, the opening degree of the first supply amount regulation valve 39 is reduced. In this case, the supply amount of the low-pressure steam supplied to the reboiler 43 decreases, while the supply amount of the steam extracted from the steam turbine 33 having a higher temperature and a higher pressure than the low-pressure steam to the reboiler 43 increases. Therefore, the amount of heat to be applied to the reboiler 43 increases. On the contrary, in a case where the amount of heat to be applied to the reboiler 43 is reduced, the opening degree of the first supply amount regulation valve 39 is increased. In this case, the supply amount of the low-pressure steam supplied to the reboiler 43 increases, while the supply amount of the steam extracted from the steam turbine 33 having a higher temperature and a higher pressure than the low-pressure steam to the reboiler 43 is reduced. Therefore, the amount of heat to be applied to the reboiler 43 is reduced.

As described above, in Embodiment 2, since the carbon dioxide recovery device 5 recovers the carbon dioxide from the gas discharged from the gas turbine 20, even when the first gas discharged from the iron-making facility 2 is used as the fuel for the gas turbine 20, the carbon dioxide generated in the iron-making facility 2 and the gas turbine 20 can be recovered, and the concentration of the carbon dioxide, which is an inert component contained in the first gas discharged from the iron-making facility 2, is not reduced. Therefore, it is possible to suppress an increase in the supply amount of nitrogen, which is an inert component used for calorific adjustment of the fuel for the gas turbine 20.

### <Modification Example of Carbon Dioxide Recovery System According to Embodiment 2 of Present Disclosure>

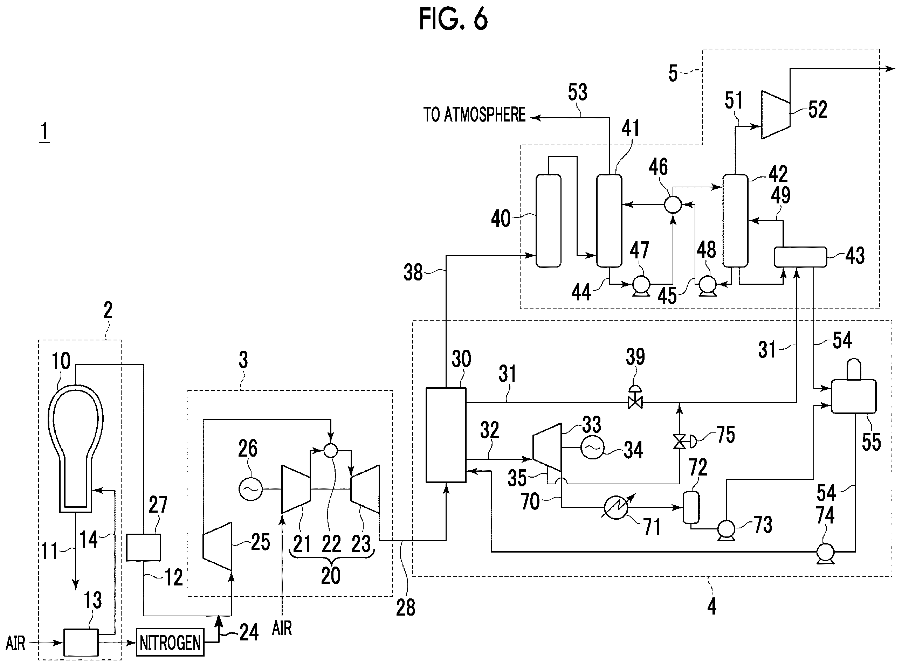

As shown in Fig. 6, a second supply amount regulation valve 75 as a second supply amount regulating device may be provided on the second line 35. In this modification example, in a case where the amount of heat to be applied to the reboiler 43 is increased after the opening degree of the first supply amount regulation valve 39 is reduced in order to increase the amount of heat to be applied to the reboiler 43, an opening degree of the second supply amount regulation valve 75 is increased in order to increase the amount of steam extracted from the steam turbine 33 supplied to the reboiler 43. On the contrary, in a case where the amount of heat to be applied to the reboiler 43 is reduced after the opening degree of the first supply amount regulation valve 39 is increased in order to reduce the amount of heat to be applied to the reboiler 43, the opening degree of the second supply amount regulation valve 75 is reduced in order to reduce the amount of steam extracted from the steam turbine 33 supplied to the reboiler 43.

### (Embodiment 3)

Next, a carbon dioxide recovery system according to Embodiment 3 will be described. The carbon dioxide recovery system according to Embodiment 3 is obtained by changing the configuration of the steam generation facility 4 with respect to Embodiment 1. Further, in Embodiment 3, the same components as those in Embodiment 1 are designated by the same reference signs, and the detailed descriptions thereof will not be repeated.

### <Configuration of Carbon Dioxide Recovery System According to Embodiment 3 of Present Disclosure>

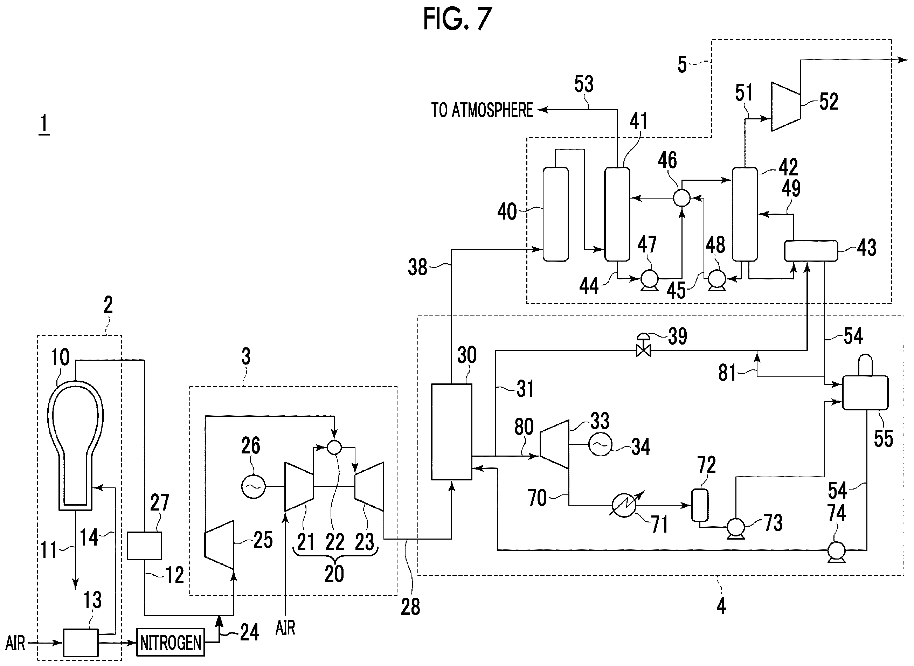

As shown in Fig. 7, in the carbon dioxide recovery system 1 according to the Embodiment 3 of the present disclosure, the heat exchanger 30 is configured such that only the low-pressure steam flows out by exchanging heat between the second gas and the water to heat the water. In order to supply the low-pressure steam to the reboiler 43, the heat exchanger 30 and the reboiler 43 communicate with each other via a first line 31. The first line 31 is provided with a first supply amount regulation valve 39, which is a first supply amount regulating device.

The steam generation facility 4 includes a steam turbine 33 that is driven by a portion of the low-pressure steam flowing out from the heat exchanger 30. In order to supply low-pressure steam to the steam turbine 33, a steam supply line 80 is provided, one end of which is connected to the first line 31 on an upstream side of the first supply amount regulation valve 39 and the other end of which is connected to the steam turbine 33. One end of a discharge line 70 for discharging the steam that has driven the steam turbine 33 is connected to the steam turbine 33. The other end of the discharge line 70 is connected to the tank 55. The discharge line 70 is provided with a cooler 71 that cools the steam flowing through the discharge line 70, a condenser 72, and a pump 73. A pump 74 is provided between the tank 55 and the heat exchanger 30 in the heat medium return line 54. In addition, a condensed water supply line 81 is provided, one end of which is connected to the heat medium return line 54 between the reboiler 43 and the tank 55 and the other end of which is connected to the first line 31 between the first supply amount regulation valve 39 and the reboiler 43. The other configurations are the same as those in Embodiment 1.

### <Operation of Carbon Dioxide Recovery System According to Embodiment 3 of Present Disclosure>

Next, the operation of the carbon dioxide recovery system according to Embodiment 3 of the present disclosure will be described with reference to Fig. 7. However, the operation of Embodiment 3 is different from the operation of Embodiment 1 only in the operation of the steam generation facility 4, and the operation of other configurations is the same. Therefore, only the operation of the steam generation facility 4 will be described below.

In Embodiment 1, the low-pressure steam and the steam that has driven the steam turbine 33 are supplied to the reboiler 43. However, in Embodiment 3, only the low-pressure steam is supplied to the reboiler 43. In Embodiment 3, the steam that has driven the steam turbine 33 is cooled in the cooler 71 while flowing through the discharge line 70, is condensed in the condenser 72, and is supplied to the tank 55 by the pump 73. The tank 55 is also supplied with the steam (or water) that has exchanged heat with the absorption liquid in the reboiler 43, and the mixed water thereof is supplied again to the heat exchanger 30 by the pump 74.

In Embodiment 3, it is also possible to regulate the amount of heat to be applied to the reboiler 43. For example, in a case where the amount of heat to be applied to the reboiler 43 is increased, the opening degree of the first supply amount regulation valve 39 is increased to increase the supply amount of the low-pressure steam supplied to the reboiler 43. On the contrary, in a case where the amount of heat to be applied to the reboiler 43 is reduced, the opening degree of the first supply amount regulation valve 39 is reduced to reduce the supply amount of the low-pressure steam supplied to the reboiler 43.

In Embodiment 3, a portion of the condensed water generated by the heat exchange between the steam and the absorption liquid in the reboiler 43 via the condensed water supply line 81 can also be supplied to the first line 31 on the downstream side of the first supply amount regulation valve 39. That is, a temperature of the steam supplied to the reboiler 43 can also be regulated by spraying a portion of the condensed water generated by the heat exchange between the steam and the absorption liquid in the reboiler 43 into the first line 31 on the downstream side of the first supply amount regulation valve 39. In a case where the amount of heat required in the reboiler 43 cannot be regulated by the above-described operation, that is, by reducing the supply amount of the low-pressure steam supplied to the reboiler 43, when the condensed water is sprayed onto the low-pressure steam that has become superheated steam downstream of the first supply amount regulation valve 39, the condensed water evaporates and the temperature of the low-pressure steam is reduced. In this manner, the amount of heat required in the reboiler 43 can be regulated.

As described above, in Embodiment 3, since the carbon dioxide recovery device 5 recovers the carbon dioxide from the gas discharged from the gas turbine 20, even when the first gas discharged from the iron-making facility 2 is used as the fuel for the gas turbine 20, the carbon dioxide generated in the iron-making facility 2 and the gas turbine 20 can be recovered, and the concentration of the carbon dioxide, which is an inert component contained in the first gas discharged from the iron-making facility 2, is not reduced. Therefore, it is possible to suppress an increase in the supply amount of nitrogen, which is an inert component used for calorific adjustment of the fuel for the gas turbine 20.

### <Other Modification Example>

In Embodiments 1 to 3, the amount of heat to be applied to the reboiler 43 is regulated according to the recovery amount of the carbon dioxide in the carbon dioxide recovery device 5. However, the present disclosure is not limited to this embodiment. In order to regulate a load of the steam turbine 33 according to a power demand, for example, when the power demand increases, the amount of heat to be applied to the reboiler 43 may be reduced to reduce the recovery amount of the carbon dioxide in the carbon dioxide recovery device 5 while increasing the load of the steam turbine 33. Examples of the fluctuation in the power demand include the fluctuation in the power demand of a rolling mill or the like that fluctuates according to steel products manufactured in the iron-making facility 2.

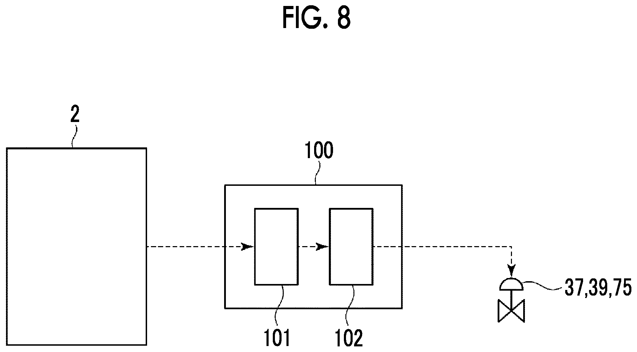

Fig. 8 is a schematic configuration diagram of an exemplary configuration in which the amount of heat to be applied to the reboiler 43 can be reduced based on the power demand in the iron-making facility 2. A control device 100 including a power demand acquisition unit 101 that acquires a power demand in the iron-making facility 2 and a steam supply amount regulating unit 102 that regulates the supply amount of steam supplied to the reboiler 43 based on the power demand acquired by the power demand acquisition unit 101 is provided. The power demand acquisition unit 101 is electrically connected to a control device (not shown) of the iron-making facility 2 or is connected to the control device via wireless communication, for example. The steam supply amount regulating unit 102 is electrically connected to the flow rate regulation valve 37, the first supply amount regulation valve 39, or the second supply amount regulation valve 75 so as to be able to regulate the opening degree of these valves for the purpose of regulating the supply amount of steam.

For example, the control device 100 is configured to include a central processing unit (CPU), a random access memory (RAM), a read only memory (ROM), and a computer-readable storage medium. A series of processing for realizing various functions is stored in a storage medium or the like in the form of a program as an example, and the CPU reads the program into the RAM or the like to execute information processing/arithmetic processing to realize the various functions.

In the configuration of Fig. 8, for example, in a case where the power demand acquisition unit 101 acquires data indicating an increase in the power demand in the iron-making facility 2, the steam supply amount regulating unit 102 determines the opening degree of the flow rate regulation valve 37, the first supply amount regulation valve 39, or the second supply amount regulation valve 75 based on a preset map, a calculation expression, or the like, and performs the opening degree regulation thereof. In this manner, the amount of carbon dioxide recovered in the carbon dioxide recovery device 5 can be reduced, and the amount of heat to be applied to the reboiler 43 can be reduced.

The contents described in each embodiment are understood as follows, for example.

[1] A carbon dioxide recovery system according to one aspect including:
   an iron-making facility (2);
   a gas turbine (20) that drives a turbine (23) with a combustion gas generated by combusting a first gas discharged from the iron-making facility (2);
   a heat exchanger (30) that exchanges heat between a second gas discharged from the turbine (23) of the gas turbine (20) and a heat medium; and
   a carbon dioxide recovery device (5) that recovers carbon dioxide from the second gas that has exchanged heat with the heat medium in the heat exchanger (30),
   in which the carbon dioxide recovery device (5) includes
      an absorption tower (41) that causes carbon dioxide to be absorbed in an absorption liquid by bringing the second gas and the absorption liquid into contact with each other,
      a regeneration tower (42) that heats the absorption liquid, which has absorbed the carbon dioxide in the absorption tower (41), to release the carbon dioxide from the absorption liquid, and
      a reboiler (43) that heats the absorption liquid by exchanging heat between the absorption liquid in the regeneration tower (42) and the heat medium that has exchanged heat with the second gas in the heat exchanger (30).

According to a carbon dioxide recovery system of the present disclosure, a carbon dioxide recovery device recovers carbon dioxide from a gas discharged from a gas turbine. Therefore, even when a gas discharged from the iron-making facility is used as fuel for the gas turbine, the carbon dioxide generated in the iron-making facility and the gas turbine can be recovered, and a concentration of the carbon dioxide, which is an inert component contained in the gas discharged from the iron-making facility, is not reduced. Therefore, it is possible to suppress an increase in a supply amount of nitrogen, which is an inert component used for calorific adjustment of the fuel for the gas turbine.

[2] A carbon dioxide recovery system according to another aspect is the carbon dioxide recovery system of [1], the system further including:
a first line (31) for supplying a portion of steam as the heat medium that has exchanged heat with the second gas in the heat exchanger (30) to the reboiler (43); and
a steam turbine (33) driven by a remainder of the steam as the heat medium that has exchanged heat with the second gas in the heat exchanger (30).

According to such a configuration, it is possible to generate power by driving the steam turbine by using the steam that is not used in the carbon dioxide recovery device. Therefore, it is possible to improve the power generation efficiency of the entire plant including the carbon dioxide recovery system.

[3] The carbon dioxide recovery system according to still another aspect is the carbon dioxide recovery system of [2], the system further including:
a first supply amount regulating device (first supply amount regulation valve 39) for regulating a supply amount of the steam supplied to the reboiler (43) via the first line (31).

According to such a configuration, the supply amount of the steam supplied to the reboiler can be regulated according to the amount of heat required in the carbon dioxide recovery device.

[4] The carbon dioxide recovery system according to still another aspect is the carbon dioxide recovery system of [3], the system further including:
a condensed water supply line (81) for supplying a portion of condensed water generated by heat exchange between the steam and the absorption liquid in the reboiler (43) to the first line (31) on a downstream side of the first supply amount regulating device (39).

According to such a configuration, a temperature of the steam supplied to the reboiler can be regulated by spraying a portion of the condensed water generated by the heat exchange between the steam and the absorption liquid in the reboiler into the first line on a downstream side of the first supply amount regulating device. In a case where the amount of heat required in the reboiler cannot be regulated by reducing the supply amount of the steam supplied to the reboiler, when the condensed water is sprayed onto the steam that has become superheated steam downstream of the first supply amount regulating device, the condensed water evaporates and the temperature of the steam is reduced, so that the amount of heat required in the reboiler can be regulated.

[5] The carbon dioxide recovery system according to still another aspect is the carbon dioxide recovery system of [2], the system further including:
a second line (35) for supplying the steam used to drive the steam turbine (33) or the steam extracted from the steam turbine (33) to the reboiler (43).

According to such a configuration, the absorption liquid is heated in the reboiler using not only the steam generated by the heat exchanger but also the steam discharged or extracted from the steam turbine. Therefore, the amount of heat required in the reboiler can be easily regulated.

[6] The carbon dioxide recovery system according to still another aspect is the carbon dioxide recovery system of [5],
in which the steam extracted from the steam turbine (33) is supplied to the reboiler (43) via the second line (35), and
the carbon dioxide recovery system further includes a first supply amount regulating device (39) for regulating a supply amount of the steam supplied to the reboiler (43) via the first line (31).

According to such a configuration, the supply amount of the steam generated by the heat exchanger and the supply amount of the steam discharged or extracted from the steam turbine can be regulated. Therefore, the amount of heat required in the reboiler can be easily regulated.

[7] The carbon dioxide recovery system according to still another aspect is the carbon dioxide recovery system of [6], the system further including:
a second supply amount regulating device (second supply amount regulation valve 75) for regulating a supply amount of the steam supplied to the reboiler (43) via the second line (35).

According to such a configuration, the supply amount of the steam generated by the heat exchanger and the supply amount of the steam discharged or extracted from the steam turbine can be regulated. Therefore, the amount of heat required in the reboiler can be easily regulated.

[8] The carbon dioxide recovery system according to still another aspect is the carbon dioxide recovery system of [5],
in which the steam used to drive the steam turbine (33) is supplied to the reboiler (43) via the second line (35), and
the carbon dioxide recovery system further includes
a bypass line (36) for supplying at least a portion of the remainder of the steam to the second line (35) by bypassing the steam turbine (33); and
a bypass flow rate regulating device (flow rate regulation valve 37) for regulating a flow rate of the steam flowing through the bypass line (36).

According to such a configuration, the supply amount of the steam supplied to the reboiler by bypassing the steam turbine can be regulated. Therefore, the amount of heat required for recovering the carbon dioxide can be applied to the reboiler.

[9] The carbon dioxide recovery system according to still another aspect is the carbon dioxide recovery system of [8], the system further including:
a first supply amount regulating device (39) for regulating a supply amount of the steam supplied to the reboiler (43) via the first line (31).

According to such a configuration, the supply amount of the steam supplied to the reboiler via the first line and the supply amount of the steam supplied to the reboiler by bypassing the steam turbine can be regulated. Therefore, the amount of heat required for recovering the carbon dioxide can be applied to the reboiler.

[10] The carbon dioxide recovery system according to still another aspect is the carbon dioxide recovery system of [1] to [9], the system further including:
a heat medium return line (54) for supplying the heat medium that has exchanged heat with the absorption liquid in the reboiler (43) to the heat exchanger (30) to exchange heat with the second gas in the heat exchanger (30).

According to such a configuration, a certain amount of the heat medium circulates between the heat exchanger and the reboiler, so that the consumption of the heat medium can be suppressed.

[11] The carbon dioxide recovery system according to still another aspect is the carbon dioxide recovery system of [1] to [10],
in which the gas turbine (20) includes
a compressor (21) that compresses air,
a combustor (22) that combusts the first gas by using compressed air compressed by the compressor (21),
the turbine (23), and
an air cooler (63) that cools a portion of the compressed air by exchanging heat between a portion of the compressed air and a portion of the heat medium.

According to such a configuration, the heat removed from the compressed air is used to heat the absorption liquid in order to regulate the temperature of the cooling air for cooling the combustor and the turbine of the gas turbine. Therefore, the thermal efficiency of the entire carbon dioxide recovery system can be improved.

[12] The carbon dioxide recovery system according to still another aspect is the carbon dioxide recovery system of [1] to [11], the system further including:
a heat generating body cooler (65) that cools a heat generating body in the iron-making facility (2) by exchanging heat between the heat generating body and a portion of the heat medium.

According to such a configuration, the exhaust heat in the iron-making facility is used to heat the absorption liquid. Therefore, the thermal efficiency of the entire carbon dioxide recovery system can be improved.

[13] The carbon dioxide recovery system according to still another aspect is the carbon dioxide recovery system of [1] to [12],
in which the carbon dioxide recovery device (5) includes
   at least one pump (rich absorption liquid pump 47, lean absorption liquid pump 48) for allowing the absorption liquid to flow inside the carbon dioxide recovery device (5), and
   a booster (52) for pressurizing a gas flowing out from the regeneration tower (42),
the carbon dioxide recovery system (1) further includes a first power generation device (26) that is driven by the gas turbine (20), and
at least any of the at least one pump (47, 48) or the booster (52) is configured to be driven by power generated by the first power generation device (26).

According to such a configuration, by using the power, which is generated by the carbon dioxide recovery system, inside the carbon dioxide recovery system, it is possible to reduce the power that needs to be supplied from an outside of the carbon dioxide recovery system or to make it unnecessary to supply the power from the outside of the carbon dioxide recovery system.

[14] The carbon dioxide recovery system according to still another aspect is the carbon dioxide recovery system of [2] to [9],
in which the carbon dioxide recovery device (5) includes
   at least one pump (47, 48) for allowing the absorption liquid to flow inside the carbon dioxide recovery device (5), and
   a booster (52) for pressurizing a gas flowing out from the regeneration tower (42),
the carbon dioxide recovery system (1) further includes a second power generation device (34) that is driven by the steam turbine (33), and
at least any of the at least one pump (47, 48) or the booster (52) is configured to be driven by power generated by the second power generation device (34).

According to such a configuration, by using the power, which is generated by the carbon dioxide recovery system, inside the carbon dioxide recovery system, it is possible to reduce the power that needs to be supplied from an outside of the carbon dioxide recovery system or to make it unnecessary to supply the power from the outside of the carbon dioxide recovery system.

[15] The carbon dioxide recovery system according to still another aspect is the carbon dioxide recovery system according to [1] to [14], the system further including:
a dust collection device (27) for removing a solid component from the first gas.

According to such a configuration, the first gas in which the solid component content is reduced by the dust collection device is supplied to the gas turbine, so that the risk of failure of the gas turbine can be reduced.

[16] The carbon dioxide recovery system according to still another aspect is the carbon dioxide recovery system of [1] to [15],
in which the gas turbine (20) includes
   a compressor (21) that compresses air,
   a combustor (22) that combusts the first gas by using compressed air compressed by the compressor (21), and
   the turbine (23),
the carbon dioxide recovery system (1) further includes a nitrogen supply line (24) for supplying nitrogen to the first gas before the first gas is supplied to the combustor (22),
the iron-making facility (2) includes
   a melter-gasifier (10), and
   an air separator (13) that separates air into oxygen and nitrogen, and
the oxygen separated in the air separator (13) is supplied to the melter-gasifier (10), and the nitrogen separated in the air separator (13) is supplied to the first gas via the nitrogen supply line (24).

When carbon dioxide is recovered from the first gas in the iron-making facility, the supply amount of nitrogen supplied for calorific adjustment increases in the first gas before flowing into the combustor. In this case, it is necessary to use a large device as the air separator provided in the iron-making facility or to further add another air separator. In contrast, according to the configuration of [16], by recovering the carbon dioxide from the gas discharged from the gas turbine, an increase in the supply amount of nitrogen due to the recovery of the carbon dioxide from the first gas does not occur, and as a result, an increase in the amount of nitrogen used for calorific adjustment can be suppressed. Therefore, the nitrogen separated by the air separator for generating the oxygen supplied to the melter-gasifier can be used.

[17] The carbon dioxide recovery system according to still another aspect is the carbon dioxide recovery system of [3], [4], and [6] to [9], the system further including:
a control device that (100) includes
   a power demand acquisition unit (101) that acquires a power demand in the iron-making facility (2), and
   a steam supply amount regulating unit (102) that regulates a supply amount of the steam supplied to the reboiler (43), based on the power demand acquired by the power demand acquisition unit (101),
in which the steam supply amount regulating unit (102) is configured to, when the power demand acquisition unit (101) acquires data indicating an increase in the power demand, adjust an operation of the bypass flow rate regulating device (37), the first supply amount regulating device (39), or the second supply amount regulating device (75) such that the supply amount of the steam to the reboiler (43) is reduced, based on the acquired power demand.

According to such a configuration, when the power demand of the iron-making facility increases, the amount of heat to be applied to the reboiler can be reduced to reduce the recovery amount of the carbon dioxide in the carbon dioxide recovery device while increasing the load of the steam turbine.

### Reference Signs List

1: Carbon dioxide recovery system
2: Iron-making facility
5: Carbon dioxide recovery device
10: Melter-gasifier
13: Air separator
20: Gas turbine
21: Compressor
22: Combustor
23: Turbine
24: Nitrogen supply line
26: First power generation device
27: Dust collection device
30: Heat exchanger
31: First line
33: Steam turbine
34: Second power generation device
35: Second line
36: Bypass line
37: Flow rate regulation valve (bypass flow rate regulating device)
39: First supply amount regulation valve (first supply amount regulating device)
41: Absorption tower
42: Regeneration tower
43: Reboiler
47: Rich absorption liquid pump
48: Lean absorption liquid pump
52: Booster
54: Heat medium return line
63: Air cooler
65: Heat generating body cooler
75: Second supply amount regulation valve (second supply amount regulating device)
81: Condensed water supply line
100: Control device
101: Power demand acquisition unit
102: Steam supply amount regulating unit

## Claims

1. A carbon dioxide recovery system comprising:
an iron-making facility;
a gas turbine that drives a turbine with a combustion gas generated by combusting a first gas discharged from the iron-making facility;
a heat exchanger that exchanges heat between a second gas discharged from the turbine of the gas turbine and a heat medium; and
a carbon dioxide recovery device that recovers carbon dioxide from the second gas that has exchanged heat with the heat medium in the heat exchanger,
wherein the carbon dioxide recovery device includes
an absorption tower that causes carbon dioxide to be absorbed in an absorption liquid by bringing the second gas and the absorption liquid into contact with each other,
a regeneration tower that heats the absorption liquid, which has absorbed the carbon dioxide in the absorption tower, to release the carbon dioxide from the absorption liquid, and
a reboiler that heats the absorption liquid by exchanging heat between the absorption liquid in the regeneration tower and the heat medium that has exchanged heat with the second gas in the heat exchanger.

2. The carbon dioxide recovery system according to claim 1, further comprising:
a first line for supplying a portion of steam as the heat medium that has exchanged heat with the second gas in the heat exchanger to the reboiler; and
a steam turbine driven by a remainder of the steam as the heat medium that has exchanged heat with the second gas in the heat exchanger.

3. The carbon dioxide recovery system according to claim 2, further comprising:
a first supply amount regulating device for regulating a supply amount of the steam supplied to the reboiler via the first line.

4. The carbon dioxide recovery system according to claim 3, further comprising:
a condensed water supply line for supplying a portion of condensed water generated by heat exchange between the steam and the absorption liquid in the reboiler to the first line on a downstream side of the first supply amount regulating device.

5. The carbon dioxide recovery system according to claim 2, further comprising:
a second line for supplying the steam used to drive the steam turbine or the steam extracted from the steam turbine to the reboiler.

6. The carbon dioxide recovery system according to claim 5,
wherein the steam extracted from the steam turbine is supplied to the reboiler via the second line, and
the carbon dioxide recovery system further comprises a first supply amount regulating device for regulating a supply amount of the steam supplied to the reboiler via the first line.

7. The carbon dioxide recovery system according to claim 6, further comprising:
a second supply amount regulating device for regulating a supply amount of the steam supplied to the reboiler via the second line.

8. The carbon dioxide recovery system according to claim 5,
wherein the steam used to drive the steam turbine is supplied to the reboiler via the second line, and
the carbon dioxide recovery system further comprises
a bypass line for supplying at least a portion of the remainder of the steam to the second line by bypassing the steam turbine; and
a bypass flow rate regulating device for regulating a flow rate of the steam flowing through the bypass line.

9. The carbon dioxide recovery system according to claim 8, further comprising:
a first supply amount regulating device for regulating a supply amount of the steam supplied to the reboiler via the first line.

10. The carbon dioxide recovery system according to any one of claims 1 to 9, further comprising:
a heat medium return line for supplying the heat medium that has exchanged heat with the absorption liquid in the reboiler to the heat exchanger to exchange heat with the second gas in the heat exchanger.

11. The carbon dioxide recovery system according to any one of claims 1 to 9,
wherein the gas turbine includes
a compressor that compresses air,
a combustor that combusts the first gas by using compressed air compressed by the compressor,
the turbine, and
an air cooler that cools a portion of the compressed air by exchanging heat between a portion of the compressed air and a portion of the heat medium.

12. The carbon dioxide recovery system according to any one of claims 1 to 9, further comprising:
a heat generating body cooler that cools a heat generating body in the iron-making facility by exchanging heat between the heat generating body and a portion of the heat medium.

13. The carbon dioxide recovery system according to any one of claims 1 to 9,
wherein the carbon dioxide recovery device includes
at least one pump for allowing the absorption liquid to flow inside the carbon dioxide recovery device, and
a booster for pressurizing a gas flowing out from the regeneration tower,
the carbon dioxide recovery system further comprises a first power generation device that is driven by the gas turbine, and
at least any of the at least one pump or the booster is configured to be driven by power generated by the first power generation device.

14. The carbon dioxide recovery system according to any one of claims 2 to 9,
wherein the carbon dioxide recovery device includes
at least one pump for allowing the absorption liquid to flow inside the carbon dioxide recovery device, and
a booster for pressurizing a gas flowing out from the regeneration tower,
the carbon dioxide recovery system further comprises a second power generation device that is driven by the steam turbine, and
at least any of the at least one pump or the booster is configured to be driven by power generated by the second power generation device.

15. The carbon dioxide recovery system according to any one of claims 1 to 9, further comprising:
a dust collection device for removing a solid component from the first gas.

16. The carbon dioxide recovery system according to any one of claims 1 to 9,
wherein the gas turbine includes
a compressor that compresses air,
a combustor that combusts the first gas by using compressed air compressed by the compressor, and
the turbine,
the carbon dioxide recovery system further comprises a nitrogen supply line for supplying nitrogen to the first gas before the first gas is supplied to the combustor,
the iron-making facility includes
a melter-gasifier, and
an air separator that separates air into oxygen and nitrogen, and
the oxygen separated in the air separator is supplied to the melter-gasifier, and the nitrogen separated in the air separator is supplied to the first gas via the nitrogen supply line.

17. The carbon dioxide recovery system according to any one of claims 3, 4, and 6 to 9, further comprising:
a control device that includes
a power demand acquisition unit that acquires a power demand in the iron-making facility, and
a steam supply amount regulating unit that regulates a supply amount of the steam supplied to the reboiler, based on the power demand acquired by the power demand acquisition unit,
wherein the steam supply amount regulating unit is configured to, when the power demand acquisition unit acquires data indicating an increase in the power demand, adjust an operation of the bypass flow rate regulating device, the first supply amount regulating device, or the second supply amount regulating device such that the supply amount of the steam to the reboiler is reduced, based on the acquired power demand.
